# EUROPEAN PATENT APPLICATION

(11) **EP 4 101 681 A1**
(43) Date of publication of application: **14.12.2022**
(21) Application number: 21178256.0
(22) Date of filing: 08.06.2021
(51) Int. Cl.: B60L 5/38, B60L 9/00, B60M 1/30, B60L 50/53

(54) **A CONTROL SYSTEM FOR CONTROLLING ELECTRICAL POWER DISTRIBUTION OF A VEHICLE FORMATION**

(71) Applicant: VOLVO TRUCK CORPORATION, 405 08 Göteborg (SE)
(72) Inventor: ÖHMAN, Mikaela, 414 81 GÖTEBORG (SE)
(74) Representative: Kransell & Wennborg KB

(57) **Abstract**

The present disclosure relates to a control system configured to control electrical power distribution of a vehicle formation, the vehicle formation comprising at least one gateway vehicle comprising a gateway prime mover for propelling the gateway vehicle, and at least one target vehicle comprising a target electric motor for propelling the target vehicle, wherein the gateway vehicle comprises a charging component electrically connectable to a charge surface along a road operable by the vehicle formation, the gateway vehicle further comprising a power distribution unit connected to the charging component and the target vehicle, the power distribution unit being configured to control electrical power distribution within the vehicle formation, wherein the control system comprises control circuitry connected to the gateway vehicle, the target vehicle and the power distribution unit, the control circuitry being configured to receive a signal indicative of a current energy requirement for the gateway vehicle and the target vehicle; and control, based on the current energy requirement, the power distribution unit to distribute electric power within the vehicle formation.

## Description

### TECHNICAL FIELD

The present disclosure relates to a control system configured to control electrical power distribution of a vehicle formation. The present disclosure also relates to a corresponding method for controlling electrical power distribution of such vehicle formation. Although the control system will be described in relation to a vehicle formation comprising trucks, the control system can also be efficiently incorporated in vehicle formations comprising other types of vehicle, as long as they distribute electrical power between each other. Such vehicle formation may, for example, be a vehicle formation of working machines, such as e.g. a plurality of haulers, dumpers, or a combination of such vehicles.

### BACKGROUND

Electrical driven vehicles are becoming increasingly popular since the demand on e.g. pollution etc. is continuously increasing from the market. An approach of electrical driven vehicles is to provide charging from charge segments positioned in e.g. the road where the vehicle is driven. These systems are often referred to as electrical road system (ERS) and the vehicles are thus referred to as ERS-vehicles. These ERS-vehicles often comprise a conductor that is arranged to be positioned in contact with the charge segments of the road in order to receive charge current therefrom.

The ERS vehicles can also be arranged to form a vehicle formation. Such a vehicle formation contains a plurality of vehicles, each comprising an individual prime mover for propulsion thereof. However, in such a vehicle formation, a problem can arise in which one of the vehicles is unable to operate its own prime mover due to too low available energy within the vehicle. There is thus a desire to reduce the risk that the available energy in one of the vehicles in the vehicle formation runs low on energy.

### SUMMARY

It is an object of the present disclosure to describe a control system for a vehicle formation which at least partially overcomes the above-described deficiencies. This is achieved by a control system according to claim 1.

According to a first aspect, there is provided a control system configured to control electrical power distribution of a vehicle formation, the vehicle formation comprising at least one gateway vehicle comprising a gateway prime mover for propelling the gateway vehicle, and at least one target vehicle comprising a target electric motor for propelling the target vehicle, wherein the gateway vehicle comprises a charging component electrically connectable to a charge surface along a road operable by the vehicle formation, the gateway vehicle further comprising a power distribution unit connected to the charging component and the target vehicle, the power distribution unit being configured to control electrical power distribution within the vehicle formation, wherein the control system comprises control circuitry connected to the gateway vehicle, the target vehicle and the power distribution unit, the control circuitry being configured to receive a signal indicative of a current energy requirement for the gateway vehicle and the target vehicle; and control, based on the current energy requirement, the power distribution unit to distribute electric power within the vehicle formation.

The wording "gateway vehicle" should be construed as one vehicle in the vehicle formation that contains the charging component. The gateway vehicle is thus able to receive electrical charge current from the charge surface along the road. The target vehicle on the other hand does preferably not contain such a charging component and is as such not able to directly receive electrical charge current from the charge surface. However, and as will be evident from the below description, the gateway vehicle and the at least one target vehicle are electrically connected to each other for distribution of electric power there between. The gateway vehicle as well as the target vehicle may be a respective working machine vehicle, such as e.g. a hauler, a loader, etc. According to one embodiment, the gateway vehicle may be a hauler and the target vehicle may be a loader, and in another embodiment, both the target vehicle and the gateway vehicle are hauler vehicles. Any combination of the working machine vehicles may thus form the vehicle formation.

Furthermore, the prime mover of the gateway vehicle is preferably an electric machine arranged to propel the gateway vehicle. However, the prime mover can also form a hybrid vehicle, i.e. a combination of electric machine and internal combustion engine (ICE), or the prime mover can solely contain an ICE.

The present disclosure is based on the insight that energy can be transferred between the vehicles in the vehicle formation with a reduced risk that one of the vehicles will have an energy level which is too low for properly operating and controlling its electric systems. The disclosure is also based on the insight that, in a situation where the vehicles comprises an acceptable energy level, the energy transfer can still be performed to top up the energy level to an even higher energy level. An advantage is thus that energy can be transferred from one vehicle to the other without reducing the source vehicle's own power level below a certain threshold. Accordingly, during operation of the vehicle formation, energy can be transferred between the vehicles even in cases where the gateway vehicle is unable to receive electric power from the charge surface along the road.

According to an example embodiment, the control circuitry may be connected to the charging component, the control circuitry being configured to control the charging component to electrically connect to the charge surface when the current energy requirement of at least one of the gateway vehicle and the target vehicle exceeds a predetermined threshold limit.

Hereby, when the energy level in at least one of the gateway vehicle and the target vehicle is low, and the vehicle formation is operated at a road comprising a charge surface, the charging component can be connected to the charge surface as the vehicle is moving, to receive electric power. In a situation where only the target vehicle requests energy, the gateway vehicle can be used as a mere energy transfer unit, which only receives electric power from the charging component and transmits all the received electric power to the target vehicle. As will also be evident from the below description, the gateway vehicle and the target vehicle may have different predetermined threshold limits. Hence, the gateway vehicle may request energy when its current energy requirement exceeds a predetermined gateway vehicle threshold limit and the target vehicle may request energy when its current energy requirement exceeds a predetermined target vehicle threshold limit.

According to an example embodiment, the control circuitry may be configured to control the charging component to transition from a first state, in which the charging component is arranged at a predetermined non-zero distance from the charge surface, to a second state, in which the charging component is moved towards the charge surface. The transition is preferably performed when the energy requirement for at least one of the gateway vehicle and the target vehicle exceeds the predetermined threshold limit.

According to an example embodiment, the control circuitry may be further configured to control the power distribution unit to distribute electric power from the charging component to the at least one of the gateway vehicle and the target vehicle.

According to an example embodiment, the target vehicle may comprise at least one target power consumer, the signal indicative of a current energy requirement being indicative of a current power requirement for the at least one target power consumer. The target power consumer can be the electric machine arranged to propel the target vehicle, or any other power consumer arranged in the target vehicle. Hence, the target vehicle can request electric power when its available energy is only sufficient to propel the electric machine but not sufficient enough to operate other systems of the target vehicle.

According to an example embodiment, the gateway vehicle may comprise a gateway energy storage system connected to the gateway prime mover, and the target vehicle comprises a target energy storage system connected to the target electric motor, wherein the power distribution unit being electrically connected to the gateway energy storage system and the target energy storage system. Hereby, the propulsion systems of the gateway vehicle and the target vehicle, i.e. the prime mover of the gateway vehicle and the electric motor of the target vehicle, will always be provided with a sufficient energy level for their operation. According to an example embodiment, the signal indicative of a current energy requirement for the target vehicle may be indicative of a current state-of-charge level, SOC, for the target energy storage system. The target energy storage system is preferably a target battery.

According to an example embodiment, the control circuitry may be further configured to control the power distribution unit to distribute electric power from the target vehicle to the gateway vehicle when the current energy requirement for the target vehicle is below a predetermined target vehicle threshold limit and the current energy requirement for the gateway vehicle exceeds a predetermined gateway vehicle threshold limit. Hereby, the target vehicle can be arranged as the power distributor. This is particularly advantageous in situations where the gateway vehicle is currently unable to receive electrical charge current from the charge surfaces of the road, or when the vehicle formation is operated at a road not containing charge surfaces.

The predetermined gateway vehicle threshold limit and the predetermined target vehicle threshold limit may correspond to one and the same threshold limit. As an alternative, the predetermined gateway vehicle threshold limit may be different, i.e. higher, or lower, from the predetermined target vehicle threshold limit.

According to an example embodiment, the control circuitry may be further configured to receive a signal from the charging component, the signal being indicative of a current electrical power request from the charge surface along the road; and control the power distribution unit to distribute electric power from at least one of the gateway vehicle and the target vehicle to the charge surface via the charging component when the charge surface requests electrical power. Hereby, the vehicle formation can be arranged as a power distributor for the charge surface of the road, i.e. a power distributor for the infrastructure.

It should be readily understood that the power distribution unit may also distribute electric power from at least one of the gateway vehicle and the target vehicle to the charge segments via the charging component when the power level of the energy storage system of one of the gateway vehicle or the target vehicle is above a predetermined energy storage limit. Hereby, when the energy storage system is "full" and unable to receive further electric power, electric power can be "drained" to the infrastructure. This can be particularly advantageous during regenerative braking. Thus, and according to an example embodiment, the power distribution unit may be configured to distribute electric power from at least one of the gateway vehicle and the target vehicle to the charge surface via the charging component when the current energy requirement of at least one of the gateway vehicle and the target vehicle is below a predetermined threshold limit.

According to an example embodiment, the control circuitry may be further configured to receive a signal indicative of the vehicle formation operating at a road free from charge surfaces; and control the power distribution unit to distribute electric power solely from the gateway vehicle to the target vehicle when the current energy requirement for the target vehicle exceeds a predetermined target vehicle threshold limit and the current energy requirement for the gateway vehicle is below a predetermined gateway vehicle threshold limit, and the vehicle formation is operated along a road free from charge surfaces.

According to an example embodiment, the charging component may be conductively or inductively connectable to the charge surface.

According to a second aspect, there is provided a method of controlling electrical power distribution of a vehicle formation, the vehicle formation comprising at least one gateway vehicle comprising a gateway prime mover for propelling the gateway vehicle, and at least one target vehicle comprising a target electric motor for propelling the target vehicle, wherein the gateway vehicle comprises a charging component electrically connectable to a charge surface along a road operable by the vehicle formation, the vehicle formation further comprising a power distribution unit connected to the charging component, the gateway vehicle and the target vehicle, the power distribution unit being configured to control electrical power distribution within the vehicle formation, wherein the method comprises determining a current energy requirement for the gateway vehicle and the target vehicle; and controlling, based on the current energy requirement, the power distribution unit to distribute electric power within the vehicle formation.

According to a third aspect, there is provided a gateway vehicle comprising a control system according to any one of the embodiments described above in relation to the first aspect.

According to a fourth aspect, there is provided a computer readable medium carrying a computer program comprising program code means for performing the steps of the second aspect when the program means is run on a computer.

According to a fifth aspect, there is provided a computer program comprising program code means for performing the steps of the second aspect when the program is run on a computer.

Effects and features of the second, third, fourth and fifth aspects are largely analogous to those described above in relation to the first aspect.

Further features of, and advantages will become apparent when studying the appended claims and the following description. The skilled person will realize that different features may be combined to create embodiments other than those described in the following, without departing from the scope of the present disclosure.

### BRIEF DESCRIPTION OF THE DRAWINGS

The above, as well as additional objects, features and advantages, will be better understood through the following illustrative and non-limiting detailed description of exemplary embodiments, wherein:
Fig. 1 is a side view illustrating a vehicle according to an example embodiment;
Fig. 2 is a side view of the vehicle formation according to an example embodiment comprising the vehicle depicted in Fig. 1;
Fig. 3 is a schematic illustration of a control system according to an example embodiment; and
Fig. 4 is a flow chart of a method for controlling electrical power distribution of the vehicle formation in Fig. 3 according to an example embodiment.

### DETAILED DESCRIPTION

The present disclosure will now be described more fully hereinafter with reference to the accompanying drawings, in which exemplary embodiments are shown. The disclosure may, however, be embodied in many different forms and should not be construed as limited to the embodiments set forth herein; rather, these embodiments are provided for thoroughness and completeness. Like reference character refer to like elements throughout the description.

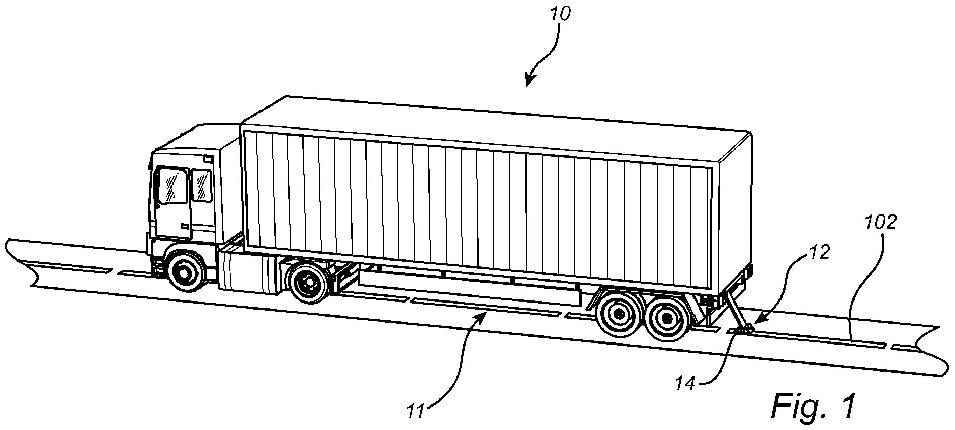

Fig. 1 is a perspective view of a vehicle 10 according to an example embodiment driving on a road 11 provided with a plurality of charge surfaces 102. The vehicle 10, here illustrated as a truck which preferably is an electrically propelled vehicle, or a vehicle propelled as a hybrid electric vehicle, further comprises a charging component 12 which is arranged to receive electrical charge current from the charge surfaces 102. In detail, the charging component 12 is configured to be positioned in an inactive position where no contact is present between a current collector 14 of the charging component 12 and the charge surfaces 102, and in an operative condition where the current collector 14 and the charge surfaces 102 are in physical contact with each other. Hence, in the inactive position the charging component 12 is lifted upwardly towards the vehicle, and in the operative condition the charging component 12 is lowered downwardly for contacting the charge surfaces 102 of the road 11.

The vehicle 10 depicted in Fig. 1 thus conductively receives electrical charge current from the charge surfaces 102 along the road 11. However, the present disclosure should not be construed as limited to conductive charging since inductive charging may function equally as well. Conductive charging thus only serves as an illustrative example.

Furthermore, the present disclosure should not be construed as limited to charge surfaces 102 positioned below the vehicle 10 on the ground surface as depicted in Fig. 1. The disclosure should be understood to function equally as well with charge surfaces 102 arranged e.g. above the vehicle or beside the vehicle on a safety fence or the like, i.e. a side-rail charging system. The charging component 12 is in the latter situation substantially horizontally movable between the inactive position and the operative condition. If the charge surfaces 102 are positioned below the vehicle 10 on the ground as depicted in the figures, the charging component 12 is substantially vertically movable between the inactive position and the operative condition. Hence, the charging component 12 can be positioned at other positions on the vehicle 10 than what is depicted in Fig. 1.

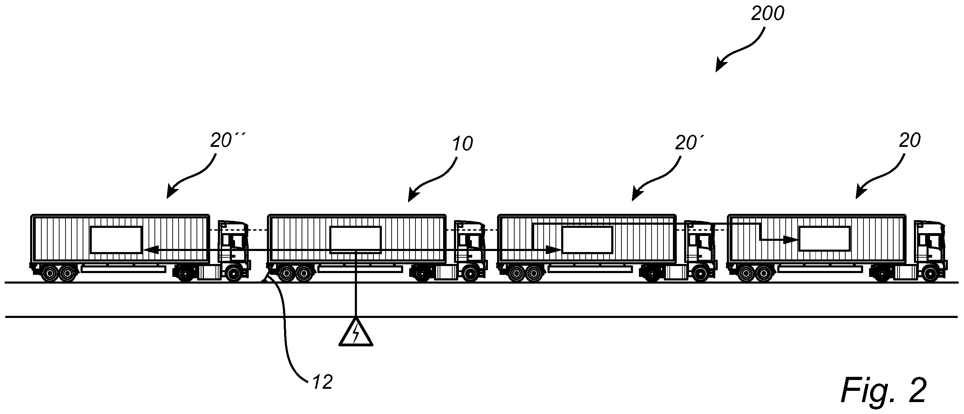

Reference is now made to Fig. 2 which illustrates the vehicle 10 forming part of a vehicle formation 200. The vehicle 10 depicted in Fig. 1 is in the follow referred to as a gateway vehicle 10, while the other vehicles 20, 20', 20" are referred to as target vehicles. The gateway vehicle 10 is thus the vehicle in the vehicle formation 200 which is able to receive electrical charge current from the road infrastructure. It should be understood that although Fig. 2 depicts a single gateway vehicle 10 in the vehicle formation 200, the vehicle formation may contain more than just one gateway vehicle 10. Any combination of the number of gateway vehicle(s) and target vehicle(s) can form part of the vehicle combination, as long as at least one gateway vehicle 10 and at least one target vehicle 20 is present. Also, the gateway vehicle 10 can be positioned foremost in the vehicle formation 200, or at any other position. In Fig. 2, the gateway vehicle is exemplified as positioned as the third vehicle in the vehicle formation 200. Furthermore, the gateway vehicle(s) as well as the target vehicle(s) may be autonomously controlled vehicle and the illustrated cabins in Figs. 1 and 2 are merely depicted as examples.

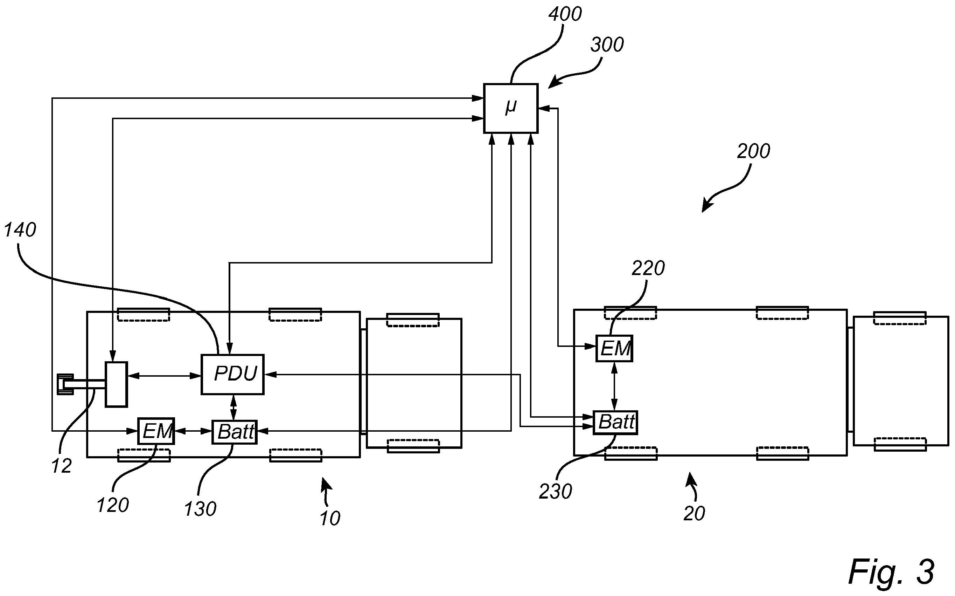

The gateway vehicle 10 comprises a prime mover for propulsion. The prime mover is preferably an electric machine operable as an electric motor as well as a generator. The prime mover of the gateway vehicle can however also be an internal combustion engine (ICE) or form a hybrid propulsion motor including an ICE as well as an electric machine. The target vehicle 20 comprises an electric motor for propulsion. The electric motor of the target vehicle may also be operable as a generator. As can be seen in Fig. 2, the target vehicles 20, 20', 20" do not contain a charging component and can thus not be directly connected to the electrical infrastructure of the road. The target vehicles can thus be referred to as non-directly connectable to the charge surface along the road. A more detailed description of other components of the gateway vehicle 10 and the target vehicles 20. 20', 20" will be given below in connection to the description of Fig. 3. The target vehicles can themselves also comprise a charging component.

As can be seen in Fig. 2, the gateway vehicle 10 is electrically connected to the target vehicles 20, 20', 20". In the example embodiment of Fig. 2, the gateway vehicle 10 is directly connected to the target vehicles 20', 20" behind and in front of the gateway vehicle 10, and connected to the front most target vehicle 20 via the second target vehicle 20'. Hereby, electrical power is able to be distributed between the vehicles 10, 20, 20', 20" in the vehicle formation 200. A control system for controlling the electrical power distribution between the vehicles in the vehicle formation is thus provided and will now be described in relation to Fig. 3.

Turning to Fig. 3, which, as described above, is a schematic illustration of the control system 300 according to an example embodiment. As can be seen, Fig. 3 illustrates the control system 300 for a vehicle formation 200 comprising one gateway vehicle 10 and one target vehicle 20. The control system 300 is of course also applicable to the vehicle formation depicted in Fig. 2 as well.

Starting with the gateway vehicle 10, this vehicle comprises a gateway prime mover 120, here illustrated in the form of a gateway electric machine 120. The gateway electric machine 120 is connected to a gateway energy storage system 130, here illustrated in the form of, and in the following referred to as, a gateway battery 130. As described above, the gateway vehicle 10 further comprises the charging component 12 which is electrically connectable to the charge surface 102 along the road. Moreover, the gateway vehicle 10 also comprises a power distributing unit 140 configured to control the power distribution within the vehicle formation 200. Although Fig. 3 illustrates the power distribution unit 140 being arranged on the gateway vehicle, it is also conceivable to position the power distribution unit 140 on the gateway vehicle, whereby energy is transmitted to the power distribution unit 140 on the gateway vehicle and e.g. one or more converters converts the energy to desired levels. The power distribution unit 140 is connected to the gateway battery 130 and to the charging component 12, as well as to the target vehicle 10 as will be described further below.

Turning to the target vehicle 20, this vehicle comprises a target electric motor 220 and a target energy storage system 230 connected to the target electric motor 220. Although not depicted in Fig. 3, target vehicle may comprise components between the target energy storage system 230 connected to the target electric motor 220, such e.g. junction boxes, etc. The target energy storage system 230 and the target electric motor 220 must not necessarily have to be directly in physically connected to each other. The target energy storage system 230, here illustrated in the form of, and in the following referred to as, a target battery 230 is further connected to the power distribution unit 140.

The gateway prime mover 120 as well as the target electric motor 220 can both be seen as power consumers of the respective vehicle. Although not depicted in the figures, both the gateway vehicle 10 and the target vehicle 20 may also comprise other power consumer components, such as an electric compressor, pumps, etc.

Moreover, the control system 300 further comprises control circuitry 400 connected to the power distribution unit 140, the gateway prime mover 120, the gateway energy storage system 130, the charging component 12 (in particular connected to a control interface of the charging component, which control interface is controlling the charging component), the target electric motor 220 and the target energy storage system 230. In particular, the control circuitry 400 is arranged to receive and transmit control signals to/from the components it is connected to. The control system 300 and control circuitry 400 may be arranged as a distributed system of the vehicle formation, where the target vehicle and the gateway vehicle comprise separate and individual control circuits. The control circuitry of the target vehicle may in such a case preferably transmit energy and request signals to the control circuitry of the gateway vehicle, while the control circuitry of the gateway vehicle receives the request signals from the target vehicle and controls the distribution of energy.

The control circuitry 400 may include a microprocessor, microcontroller, programmable digital signal processor or another programmable device. The control circuitry 400 may also, or instead, each include an application specific integrated circuit, a programmable gate array or programmable array logic, a programmable logic device, or a digital signal processor. Where the control circuitry 400 includes a programmable device such as the microprocessor, microcontroller or programmable digital signal processor mentioned above, the processor may further include computer executable code that controls operation of the programmable device. It should be understood that all or some parts of the functionality provided by means of the control circuitry 400 may be at least partly integrated with the control system 300.

As will also be described in further detail below, the power distribution unit 140 is preferably configured to determine how to distribute energy available in the vehicle formation, for example from the gateway vehicle to the target vehicle, or vice versa. The power distribution unit 140 is controlled by the control circuitry 400 which may comprise a power management functionality (not shown) that uses information from e.g. the electrical road surface, the gateway vehicle, and the target vehicle (or a master vehicle that acts as a coordinator of the vehicle formation when it comes to energy transfer requests and planning) to determine what/if any conditioning needs to be done before transferring the energy to the relevant outlet. The power distribution unit can, in its most basic form, be a switch unit that is controlled by the control circuitry 400. By, for example, incorporating junction boxes, the power distribution unit can receive energy from different sources and combine it into one output. Such junction boxes can also enable electrical power from one source to be split up to several outputs on the power distribution unit 140.

Furthermore, the power distribution unit 140, or the power management functionality may condition the distributed electrical power to the form and e.g. voltage levels that the power management function requests. Hereby, the power distribution unit 140 preferably comprises e.g. one or more AC/DC converters, one or more DC/DC converters, and/or current divider circuits.

By means of the above control system 300, electrical power can be distributed within the vehicle formation. In particular, the control circuitry 400 of the control system 300 is configured to receive requests from the vehicle formation to initiate or terminate electrical power transfer, along with relevant status information and power request properties (e.g. how much, what form, what levels, etc.). The control circuitry is also configured to receive of signals, such as e.g. signals indicative of target vehicle status (ready to charge or not) and to which outlet(s) electrical power should be transferred (e.g. rear, front, and/or both rear and front). Termination can be triggered from both a signal received from the gateway vehicle and/or from any other vehicle in the vehicle formation. One reason for termination electrical power transfer can be that the target vehicle has reached a desired state of charge (SOC) level, or that the gateway vehicle needs to terminate electrical power transfer due to a vehicle issue, e.g. isolation fault, excessive heat of the battery, a malfunction of the interface to the charging component, and/or a notification from sensors and/or the charging component 12 that the vehicle formation 200 is approaching a hazardous situation at which there, for some reason, is a need to terminate electrical power distribution.

Once an electrical power distribution request has been received from the vehicle formation 200, the control circuitry can evaluate the status of the system(s) of the gateway vehicle 10 and decide a strategy for operation of the power distribution unit 140. As a non-limiting example, one strategy can be that if electrical power is available from the road infrastructure, i.e. from the charge surface, electrical power should have highest priority to be distributed from the charge surface, via the charging component, to the gateway vehicle and/or the target vehicle when any one of these vehicles request electrical power.

Furthermore, the control circuit 400 may also be arranged to control the charging component 12 by transmitting control signals to the interface of the charging component such that the charging component 12 is raised or lowered, thus controlling the lateral movement of the charging component 12 using, for example, sensors and actuators integrated in the charging component 12. Thus, if there is a desire to receive electrical charge current from the charge surface, the control circuitry controls the charging component 12 to be lowered towards the charge surface.

The electrical power distribution of the vehicle formation 200 can thus be controlled in a numerous number of way, and the following will present some examples.

According to a non-limiting example, the control circuitry receives a signal indicative of a current energy requirement of at least one of the vehicles in the vehicle formation 200, and the vehicle is operated at a road comprising the above described charge surfaces, which are operable. The control circuitry 400 can in such a case control the charging component 12 to be positioned to receive electrical charge current. The power distribution unit 140 can distribute the electrical power to e.g. the target battery 230 and/or the gateway battery 130 when the current energy requirement for any of these vehicle is above a predetermined threshold. If the SOC-level of the gateway battery 130 is above a predetermined gateway threshold limit, electrical power may in addition be distributed from the gateway battery 130 to the target battery 230. Likewise, electrical power can also be distributed from the target battery 230 to the gateway battery 130 when the SOC-level of the target battery 230 is above a predetermined threshold limit and the gateway battery 130 requests charging. This electrical power distribution is controlled by the power distribution unit 140.

According to another non-limiting example, if the vehicle formation 200 is operated at a road that does not contain charge surface, or if the charging component 12 for some reason is unable to receive charge current from the charge surfaces 102, the power distribution unit 140 is configured to distribute electrical power internally between the vehicles in the vehicle formation 200. For example, if the SOC-level in the gateway battery 130 is high and the SOC-level in the target battery 230 is low, the power distribution unit 140 can distribute electrical power from the gateway battery 130 to the target battery 230. On the other hand, if the SOC-level in the gateway battery 130 is low and the SOC-level in the target battery 230 is high, the power distribution unit 140 can instead distribute electrical power from the target battery 230 to the gateway battery 130.

Furthermore, and according to yet another non-limiting example, also the charge surface may request electrical charge current. In such situation, the control circuitry can be configured to receive a signal from the charging component, the signal being indicative of a current electrical power request from the charge surface along the road; and control the power distribution unit 140 to distribute electric power from at least one of the gateway vehicle, preferably from the gateway battery 130, and the target vehicle, preferably from the target battery 230, to the charge surface via the charging component. The signal may also, according to another non-limiting example, be wirelessly received from the charging surface, or another control unit of the infrastructure. The control unit of the infrastructure may thus receive information/data from the charging surface and distribute this data to the control circuitry of the vehicle.

The power distribution unit 140 can also distribute electrical power from the gateway vehicle and/or the target vehicle when, for example, there is a desire to drain the gateway battery 130 or the target battery 230. Draining of a battery may be desirable when the SOC-level is too high, and the control circuit receives a signal indicative of an upcoming driving situation where regenerative braking is preferable and the battery/batteries need to be able to receive electrical power.

The above has mainly described that the gateway battery 130 and the target battery 230 requests electrical power. However, other power consumer(s) of the gateway vehicle 10 and the target vehicle 20 can also request electrical power, whereby the power distribution unit 140 can distribute electrical power in a manner similar to the above description, i.e. internally between the vehicles in the vehicle formation or from the charge surface via the charging component 12.

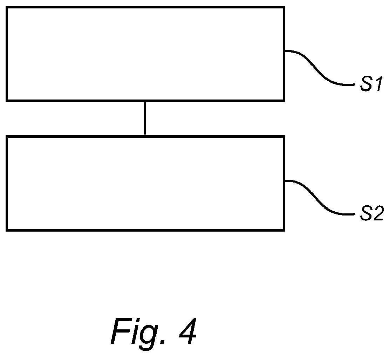

In order to sum up, reference is made to Fig. 4 which is a flow chart of a method for controlling electrical power distribution of the vehicle formation 200 in Figs. 2 and 3. During operation of the vehicle formation 200, the control circuitry determines S1 a current energy requirement for the gateway vehicle 10 and the target vehicle 20. For example, the control circuitry 400 may receive a signal indicative of a current SOC-level of the gateway battery 130 and the target battery 230. Based on the current energy requirement, the power distributing unit 140 is controlled S2 to distribute electrical power within the vehicle formation 200 according to any one of the above described examples. Hence, based on the current situation, i.e. which vehicle is in need of electrical power, which vehicle has a surplus of electrical power, if the charging component 12 is able to receive electrical charge current from the charge surface 102 of the road, etc., the control circuit 400 controls the power distribution unit 140 to distribute electrical power in an optimized manner.

It is to be understood that the present disclosure is not limited to the embodiments described above and illustrated in the drawings; rather, the skilled person will recognize that many changes and modifications may be made within the scope of the appended claims.

## Claims

1. A control system configured to control electrical power distribution of a vehicle formation, the vehicle formation comprising at least one gateway vehicle comprising a gateway prime mover for propelling the gateway vehicle, and at least one target vehicle comprising a target electric motor for propelling the target vehicle, wherein the gateway vehicle comprises a charging component electrically connectable to a charge surface along a road operable by the vehicle formation, the gateway vehicle further comprising a power distribution unit connected to the charging component and the target vehicle, the power distribution unit being configured to control electrical power distribution within the vehicle formation, wherein the control system comprises control circuitry connected to the gateway vehicle, the target vehicle and the power distribution unit, the control circuitry being configured to:
- receive a signal indicative of a current energy requirement for the gateway vehicle and the target vehicle; and
- control, based on the current energy requirement, the power distribution unit to distribute electric power within the vehicle formation.

2. The control system according to claim 1, wherein the control circuitry is connected to the charging component, the control circuitry being configured to:
- control the charging component to electrically connect to the charge surface when the current energy requirement of at least one of the gateway vehicle and the target vehicle exceeds a predetermined threshold limit.

3. The control system according to claim 2, wherein the control circuitry is configured to control the charging component to transition from a first state, in which the charging component is arranged at a predetermined non-zero distance from the charge surface, to a second state, in which the charging component is moved towards the charge surface.

4. The control system according to any one of claims 2 or 3, wherein the control circuitry is further configured to:
- control the power distribution unit to distribute electric power from the charging component to the at least one of the gateway vehicle and the target vehicle.

5. The control system according to any one of the preceding claims, wherein the target vehicle comprises at least one target power consumer, the signal indicative of a current energy requirement being indicative of a current power requirement for the at least one target power consumer.

6. The control system according to any one of the preceding claims, wherein the gateway vehicle comprises a gateway energy storage system connected to the gateway prime mover, and the target vehicle comprises a target energy storage system connected to the target electric motor, wherein the power distribution unit being electrically connected to the gateway energy storage system and the target energy storage system.

7. The control system according to claim 6, wherein the signal indicative of a current energy requirement for the target vehicle is indicative of a current state-of-charge level, SOC, for the target energy storage system.

8. The control system according to any one of the preceding claims, wherein the control circuitry is further configured to:
- control the power distribution unit to distribute electric power from the target vehicle to the gateway vehicle when the current energy requirement for the target vehicle is below a predetermined target vehicle threshold limit and the current energy requirement for the gateway vehicle exceeds a predetermined gateway vehicle threshold limit.

9. The control system according to any one of the preceding claims, wherein the control circuitry is further configured to:
- receive a signal from the charging component, the signal being indicative of a current electrical power request from the charge surface along the road; and
- control the power distribution unit to distribute electric power from at least one of the gateway vehicle and the target vehicle to the charge surface via the charging component when the charge surface requests electrical power.

10. The control system according to any one of the preceding claims, wherein the control circuitry is further configured to:
- receive a signal indicative of the vehicle formation operating at a road free from charge surfaces; and
- control the power distribution unit to distribute electric power solely from the gateway vehicle to the target vehicle when the current energy requirement for the target vehicle exceeds a predetermined target vehicle threshold limit and the current energy requirement for the gateway vehicle is below a predetermined gateway vehicle threshold limit, and the vehicle formation is operated along a road free from charge surfaces.

11. The control system according to any one of the preceding claims, wherein the charging component is conductively or inductively connectable to the charge surface.

12. A method of controlling electrical power distribution of a vehicle formation, the vehicle formation comprising at least one gateway vehicle comprising a gateway prime mover for propelling the gateway vehicle, and at least one target vehicle comprising a target electric motor for propelling the target vehicle, wherein the gateway vehicle comprises a charging component electrically connectable to a charge surface along a road operable by the vehicle formation, the vehicle formation further comprising a power distribution unit connected to the charging component, the gateway vehicle and the target vehicle, the power distribution unit being configured to control electrical power distribution within the vehicle formation, wherein the method comprises:
- determining (S1) a current energy requirement for the gateway vehicle and the target vehicle; and
- controlling (S2), based on the current energy requirement, the power distribution unit to distribute electric power within the vehicle formation.

13. A gateway vehicle comprising a control system according to any one of claims 1 - 11.

14. A computer readable medium carrying a computer program comprising program code means for performing the steps of claim 12 when the program means is run on a computer.

15. A computer program comprising program code means for performing the steps of claim 12 when the program is run on a computer.
